# EUROPEAN PATENT SPECIFICATION

(11) **EP 3 911 192 B1**
(45) Date of publication and mention of the grant of the patent: **07.08.2024**
(21) Application number: 20709747.8
(22) Date of filing: 13.01.2020
(51) Int. Cl.: A41D 13/015, A41D 1/084

(54) **A SHOCK-ABSORBING SYSTEM FOR CLOTHING AND ACCESSORIES**
STOSSDÄMPFUNGSSYSTEM FÜR KLEIDUNG UND ZUBEHÖR
SYSTÈME AMORTISSEUR DE CHOCS POUR VÊTEMENTS ET ACCESSOIRES

(30) Priority: 15.01.2019 IT 201900000639
(43) Date of publication of application: 24.11.2021
(73) Proprietor: Nicolini Silvana S.r.l., 46033 Castel d'Ario (Mantova) (IT)
(72) Inventor: VICINI, Ambra, 46033 Castel d'Ario (Mantova) (IT)
(86) International application number: PCT/IT2020/000003
(87) International publication number: WO 2020/148792

(56) References cited:
- WO-A1-2006/126780
- US-A1- 2002 017 805
- US-A1- 2006 070 171
- US-B1- 6 928 665

## Description

### Technical field

The present invention refers to a shock-absorbing system for clothing and accessories which is particularly recommended as padding to absorb and attenuate blows and vibrations, to permit efficient breathability, but above all to feature notable lightness.

### Background Art

As is known, when a person is in motion - be it on foot or on a vehicle such as, for example, a bicycle or a motorbike - the said person is exposed to vibrations, blows, and impacts that have repercussions on a part of the body and that, with time and frequency, may bring about and trigger physical problems that can turn into illnesses.

A first example, is due to cycling activity during which, if the genital, perineal, and ischial area, nervous and circulatory diseases may arise since the weight of the body exerted on the saddle can limit the flow of blood in the aforesaid area and sprains may occur with consequent partial insensitivity of the genitals and the legs. Indeed, on the resting surface - consisting of a saddle measuring just a few square centimetres - there are bones, nerves, muscles, tendons, and cartilage present, as well as the containment structures thereof, and - over the course of a normal bicycle ride, these organs and structures are exposed to stress from prolonged compression and trauma from blows.

To overcome the problems just outlined, for some time now, cycling tights and shorts have been produced which feature reinforcements and padding designed to protect the aforesaid areas. These protective elements form what is known as a crotch liner, which has proved to be an extremely important element, firstly for the cyclist's health, but also for improving performance.

As is known, the crotch liner is a shock-absorbing structure applied to or incorporated into cycling tights and shorts which protects the cyclist's pelvic area against impacts and vibrations.

In particular, the crotch liners currently present on the market are particularly bulky and decidedly unsightly, are produced with materials such as gels and foams arranged in a mutually superimposed fashion so as to create layers that, in addition to being bulky, considerably reduce transpiration from the person's skin.

The various drawbacks found include the limited lifetime given that, with use and washing, the layers of the different materials that are superimposed tend to move, changing the initial arrangement and wearing out, losing therefore functionality and effectiveness. Furthermore, the stratification brings about reduced breathability even though there are often perforations envisaged in the structure of the crotch liner to allow air to flow through, but this airflow is scarce due to both the difficulty for the air to flow through due to the size of the perforations and to the presence of perspiration, which tends to occupy these small perforations and also to the positioning thereof, which mainly in the centre, where the crotch liner is in contact with the saddle. Furthermore, with the compression due to the weight of the person, the material constituting the crotch liner tends to dilate with the heat and the motion on the saddle, as a result of which the perforations are often partly or entirely blocked.

In addition to the foregoing, in the crotch liners of cycling tights and shorts, the adoption of thermoplastic gel has made it possible to reach a much higher capacity of shock absorbance than with foams, but the material continues to pose considerable limits in terms of breathability capacity with respect to the expanded foams and the heaviness of the gel, which is unwelcome for users.

A further example consists of motorbike helmets, which feature - in the interior thereof - padding designed to neutralise any impacts in the event of a fall and to increase comfort upon contact between the user's head and the structure of the helmet. It has been found that, with time, the padding elements currently utilised tend to wear and a flake apart, drastically reducing the effectiveness thereof. This rapid wear is mainly caused by the perspiration since proper transpiration and air circulation does not occur in the padding, but would provide greater comfort to the person who, upon removing the helmet, often finds themself with extremely damp hair and with a consequent risk of sickness, in addition to the discomfort.

Similarly, the padding elements present in jackets and motorbike shorts create uncomfortable bulkiness, make the items of clothing heavy and reduce the user's freedom of movement, making them awkward and stiff in their movements.

A further example are knee and shoulder pads, which are heavy, rigid and bulky for players, in addition to not allowing adequate transpiration, which - with time - can give rise to irritations and discomfort on the skin.

Nowadays, the need for items of clothing and accessories offering an increasingly specialist, precise performance, leads to research in to the development of ever-higher performing processing in order to meet specific requirements concerning comfort, temperature regulation, resistance, containment, protection, support, etc.

One requirement found within the market is the need for items of clothing and accessories which are increasingly ergonomic, thereby allowing the user to carry out a whole series of movements with the utmost comfort without any feeling of constriction or limitation, promoting - at the same time - perfect transpiration and temperature regulation, good protection for the part of the body with which the padding present in the item of clothing comes into contact, while also being resistant to wear and tear and having an aesthetically pleasing appearance.

trigger irritation phenomena on the skin or the proliferation of bacteria and fungi, for which a warm moist environment offers an ideal habitat.

In addition to the foregoing, the majority of the padding elements absorb the perspiration produced, but retain part thereof, as a result of which the padding becomes heavier, leaving an unpleasant damp feeling on the skin, in addition to being harmful to the body, which undergoes uncomfortable alternating moments of hot and cold.

The applicant is aware of the document US 2002/017805 A1 which discloses a composite energy absorber for the deceleration of an object which hits the absorber. The configuration of the absorber varies with inclinations of the plane, with protruding elements that must create friction to stop an object that arrives on this absorber. Furthermore, in the vicinity of the perimeter, segments are provided that join a protuberance with the adjacent one to create a stiffening and containment structure for the incoming objects.

The applicant is aware of the document WO 2006/126780 which discloses the preamble of claim 1 and which illustrates a protection for the body with shock absorbers both inside and outside. The protector illustrated in the patent consists of a soft cylindrical pad which contains a space which is provided to accommodate a leg or an arm. The protection consists of multiple ventilation holes to supply air to the soft silicone pads and there are shock absorbing elements formed around both the inside and the outside of the soft silicone pads to make the device more wearable and absorb external shocks even better.

The applicant is aware of the document US 2006/070171 A1 which discloses a shock-absorbing structure comprising a generally flat surface made of flexible plastic material. A plurality of hollow and vertical support elements extend from the flat surface. The support elements are made of flexible plastic material. There is also a plurality of openings in each of the support members, the opening defines air passages within the shock-absorbing structure to allow air to flow through the support members. The shock absorbing structure can be used in helmets, shin guards, knee pads, elbow pads, shoulder pads, chest protectors, gloves, trousers and footwear.

In addition, patent US 6,928,665 B1 is known which describes a cyclist pant which has a breathable cushion which includes a perineal part and covers the part of the crotch and the part of the buttocks which covers the part of the saddle. The breathable cushion provides padding consisting of 2 layers that form a grid (matrix) of pockets filled with gel or other material.

### Disclosure of Invention

The object of the present invention is essentially to solve the problems of the commonly known technique by overcoming the aforesaid difficulties by means of a a shock-absorbing system for clothing and accessories that is able to absorb and attenuate blows and vibrations, allow efficient breathability, but above all is notably lightweight.

A second object of the present invention is to provide a shock-absorbing system for clothing and accessories which is much more flexible in order to adapt perfectly to the morphology of the user's body and of be particularly lightweight so as to be extremely comfortable.

A further object of the present invention is to provide a shock-absorbing system for clothing and accessories that makes it possible to expel moisture by means of a "pump" effect, the said action being performed through the expansion/compression of the shock-absorbing structure.

A still further object of the present invention is to provide a shock-absorbing system for clothing and accessories which is able to perform a protective function in different settings and sectors.

A further but not final object of the present invention is to provide a shock-absorbing system for clothing and accessories which his easy to manufacture and works well.

These objects and more besides, which will better emerge over the course of the present description, are essentially achieved by means of a shock-absorbing system for clothing and accessories, in accordance with the claims below.

### Brief Description of Drawings

Further characteristics and advantages will better emerge in the detailed description of a shock-absorbing system for clothing and accessories according to the present invention, provided in the form of a non-limiting example, with reference to the accompanying drawings, in which:
- Figure 1 shows, schematically and from a perspective view, a shock-absorbing system for clothing and accessories according to the present invention;
- Figure 2 shows, schematically, a section view of the element shown in Figure 1;
- Figure 3 shows, schematically, a detail of the view in Figure 2;
- Figure 4 shows, schematically, a variant of a detail of the element in Figure 1;
- Figure 5 shows, schematically and from a perspective view, an embodiment of the system in question for a crotch liner for a pair of cycling tights and shorts;
- Figure 6 shows, schematically and from a different perspective view, the embodiment in Figure 5.

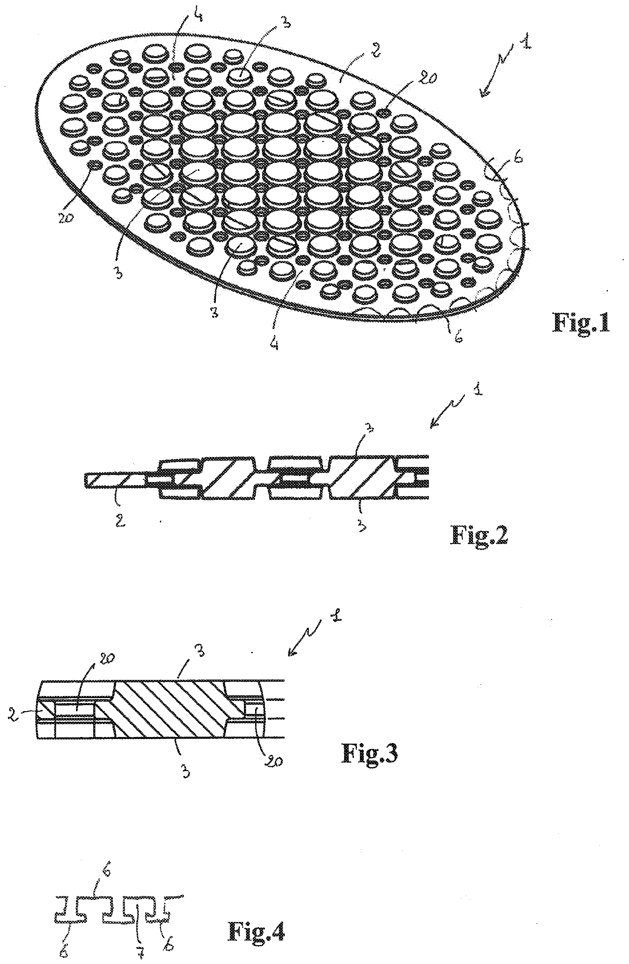

With reference to the aforesaid figures, and in particular Figure 1, 1 denotes a shock-absorbing system for clothing and accessories according to the present invention.

### Best Mode for Carrying Out the Invention

The shock-absorbing system for clothing and accessories 1 in question is essentially constituted of a base plate 2 from which a plurality of "towers" 3 extends appropriately distributed over the surface of the plate 2. In more detail, the "towers" 3 have different sized diameters from each other depending on the load to which they will be exposed. The shock-absorbing system in question essentially performs a cushioning function by means of a shock-absorbing element constituted of a plate and towers.

As shown in Figure 1, the shock-absorbing element shown is envisaged to be inserted into a crotch liner for cycling tights and shorts at the surface resting on the saddle in position with each ischial bone. In the element, the towers 3 are larger in the centre and become gradually smaller and sparser towards the edges of the said element. In particular, the larger, more closely spaced towers are envisaged to withstand the greater load exerted by the person and to provide a larger resting area for the ischial bone while the towers which are gradually smaller have to withstand a lesser load and provide less support.

In addition to the foregoing, the arrangement of the towers 3 on the plate 2 creates a sort of grid 4 which - since the plate is extremely thin - generates a path with spaces and channels that that allow a circulation of air and lend flexibility to the element. In particular, the distribution and arrangement of the towers over one surface of the plate is also reproduced on the other surface, as shown in Figure 3.

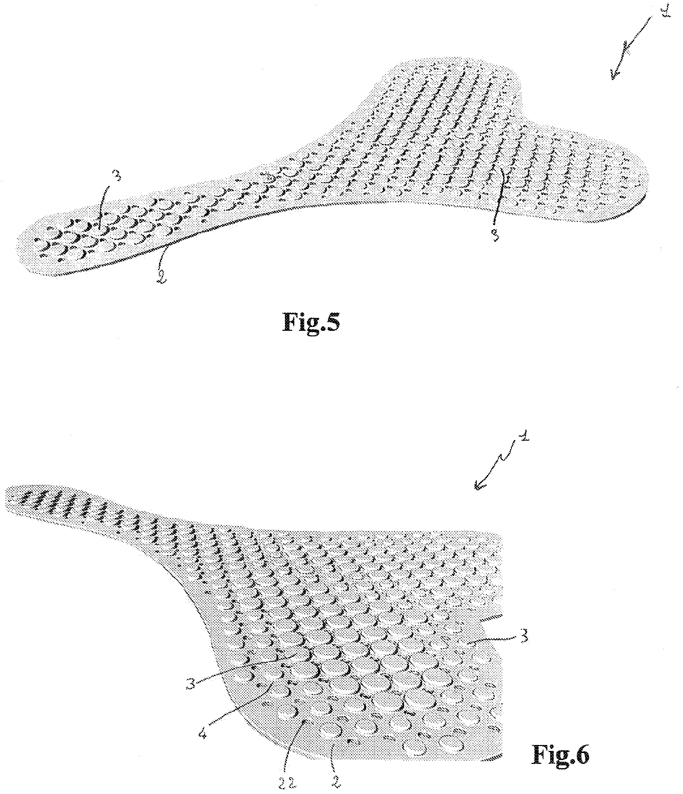

Furthermore, as shown in Figures 1 and 6, the plate 2 is endowed with a plurality of holes 20 that are designed for the intake of air from the exterior and for the outlet of overheated air and perspiration coming from the body of the user, as will emerge more clearly below.

In particular, the configuration of the towers guarantees similar support and shock absorbance to that offered by a spring and allows the tower to move not only in a vertical fashion, but also with horizontal oscillations. The horizontal motion in the channels in the grid promotes and assists air circulation also when the shock-absorbing element is exposed to pressure from the user resting thereupon. Since the shock-absorbing element is extremely flexible even when exposed to a load, there are nevertheless portions which are exposed to lesser loads exerted by the body, as a result of which air flows and the different portions are in any case exposed to the different loads in a continuously alternating manner due to the motion of the person on the saddle.

This dynamic combination of the said movements creates a "pump" effect inside the crotch liner, which develops due to the expansion and subsequent compression movement, activating a forced expulsion mechanism which pushes out the air inside, which is loaded with moisture produced by perspiration resulting from physical exertion by the user, and a subsequent intake of air caused by a sort of "vacuum" (pressure difference) which is created as a result of the previous expulsion of the air. The movement of the air is controlled by the plurality of holes (20), which contribute to an important aeration of the -in this case - iliac areas. The diameters of the openings of the holes 20 are decidedly greater than the perforations envisaged in the crotch liners currently in use.

In agreement with the present embodiment, the plate 2 features a continuous linear edge, but one variant envisages a series of jagged sections 6, as shown in Figure 1, or other configurations of jagged sections such as, for example, those shown in Figure 4, which secure the plate between the further layers of material envisaged in the configuration of a crotch liner. This type of conformation of the edge allows the element to be secured permanently preventing it moving during washing.

In greater detail, when the shock-absorbing element is, for example, made of gel, which is a material that cannot be glued with other materials, the jagged edge may have sectors with glue 7 which create obstacles preventing the gel moving, as shown in Figure 4.

According to the present invention, the towers 3 feature a flat upper surface, but can also be slightly arched to provide the user with a more localised support so as to leave even more space for the circulation of air in contact with the user's skin.

In addition to the foregoing, since the plate 2 is extremely thin, it is flexible as a result of which it is able to adhere to the user's body in an extremely comfortably manner since it is anatomical and, at the same time, it is extremely lightweight and not at all bulky with the consequence that it is also aesthetically acceptable for padding.

As described earlier, the shock-absorbing element 1 features a structure having different sized towers wherein the support is greater in the more cushioned portion (where the towers are more numerous and larger in size), the said portion being located where, for example, the buttocks are resting on the saddle so as to better and more comfortably support the user's perineal and ischial area.

Furthermore, the shock-absorbing element according to the present invention can be configured as shown in Figure 5, again to be utilised in a crotch liner for cycling tights and shorts. With this essentially pear-shaped configuration, the element is designed to absorb blows and vibrations in both the ischial area and the genital area, in addition to promoting proper, adequate air exchange. Indeed, there are more sectors with a concentration of larger towers for the very reason of offering more support and shock absorbance areas where the user is resting on the saddle, as shown in Figure 6.

The aforesaid shock-absorbing element can be employed in the production of a crotch liner either alone or in association with layers of expanded foam.

The shock-absorbing element according to the present invention is produced in different variants in addition to those recommended earlier depending on the degree of shock absorbance one wishes to obtain; indeed, the different "towers" feature different sizes and different distributions so as to offer users a range of protective elements depending on the user's requirements, weight, habits, and necessities. Also the form can be adjusted and adapted to the specific need for protection.

When utilised in a crotch liner for cycling tights and shorts, the shock-absorbing system in question decreases the overall weight of the crotch liner by approximately 15%, increases flexibility of the shorts by 25%, offers transpiration with expulsion of air and vaporise and increases air circulation by 45% in the areas where the shock-absorbing element according to the present invention is positioned.

In greater detail, the shock-absorbing element in question is intended to actually change the concept of padding and protection. Indeed, the tendency regarding many crotch liners present in cycling tights and shorts available on the market is for cyclists to add padding while the structure of the element in question removes it because the most important resting points are few in number and essential, in the same way that the structure worn must be, above all in a sport where a single gram can make the difference.

In addition to the foregoing, the shock-absorbing element can be inserted into the interior of a helmet as padding to protect the head, allowing the circulation of air and the outlet of vapour and moisture, which keep the keep the head dry in addition to guaranteeing optimal comfort inside the helmet. Similarly, the shock-absorbing element can be inserted into the shoulder, elbow, and knees areas of items of clothing for motorcyclist or for other sports, utilised to cushion the saddle of both bicycles and motorbikes, utilised to pad knee, elbow, and shoulder protectors for those who play volleyball, basketball, or other sports where protection elements are necessary.

In addition, while maintaining the same towers and grid configuration and therefore the same padding configuration, the thickness can be increased or reduced depending on the level of protection and support one wishes to achieve.

The shock-absorbing element described earlier is preferably made of thermoplastic gel, but the constituent structure can also be produced in further materials designed for padding, such as foams, PVC, etc.

After the predominantly structural description, the operation of the invention in question will now be outlined.

The shock-absorbing element is inserted into the conventional outers of crotch liners (which are subsequently applied to or inserted into the cycling tights and shorts) and coupled to the fabric of garments such as jackets or tights and shorts when these are required to protect delicate parts of the body against blows and vibrations, such as garments for motorcyclists or in accessories such as helmets, and knee, elbow and shoulder protectors in other sports.

Thus the present invention achieves the objects set.

The shock-absorbing system for clothing and accessories in question allows blows and vibrations to be absorbed and attenuated, thereby adequately protecting the parts of the body in contact therewith, allows efficient breathability, thereby offering good circulation of air and the outlet of moisture caused by the perspiration produced with motion and physical exertion. In particular, the shock-absorbing element features a notable lightness that reduces the weights, the thicknesses and, consequently, the bulk of the padding and excellent flexibility, which aids the user's movement guaranteeing a good level of comfort.

Furthermore, the shock-absorbing system for clothing and accessories, since particularly flexible, adapts perfectly to the morphology of the user's body and better accompanies the various movements thereof.

Advantageously, the shock-absorbing system according to the present invention is able to expel moisture by means of a pump effect brought about through the expansion and compression action of the shock-absorbing structure, in addition to promoting excellent air circulation between the exterior and the interior.

A further advantage of the present shock-absorbing system is due to the fact that the crotch liner originating therefrom is much lighter and thinner than the crotch liners currently available on the market, but maintains the same characteristics, in terms of cushioning and shock absorbance, as the layers of gel according to the commonly known technique, which - however - are much thicker and stiffer and, consequently, heavier.

Advantageously, the shock-absorbing system according to the present invention considerably reduces the mechanical and cutaneous stress and stress to the user's nervous system, bones, and muscles and in particular those of cyclists, in addition to preventing genital contusions and irritations.

In addition, the shock-absorbing element offers comfort and protection when, for example, the cyclist is on the saddle and makes unsightly, bulky padding elements unnecessary in tights and shorts, unlike with crotch liners according to the commonly known technique and, furthermore, improves the cyclist's performance since there are fewer elements of disturbance and discomfort than with the crotch liners according to the commonly known technique.

A further advantage of the present system originates from the fact that, since they are more flexible and less bulky with respect to the conventional padding elements, this leads the user to assume a more correct position on the saddle since the user tends to lean forwards and downwards, keeping their rear part upwards. Furthermore, since the padding is thinner, it is more stable, rendering the user's body more integral with the saddle and reducing slippage of the user and, consequently, the friction that would occur in the event of slippage on the saddle, as occurs with the crotch liners according to the commonly known technique which, since particularly voluminous and bulky, do not rest properly on the saddle. These movements bring about an expenditure of energy by the user to make the continual movements required to compensate for the slippage.

In particular, by reducing the stress factors the state after the pedalling activity also improves, helping cyclists with chronic problems to make a considerable recovery in terms of physical fitness.

With the present garment, that which occurred with the tights and shorts according to the commonly known technique does not happen any more, i.e. the cyclist was induced or forced to change the position thereof on the saddle in the event of discomfort or pain and this behaviour led to irritation of both muscles and joints in anatomical structures that were not in direct contact with the saddle, such as the adductor muscles and/or the knee.

In addition to the foregoing, the shock-absorbing system in question offers a user a element of padding with areas of differentiated transpiration based on the need to disperse perspiration in a localised manner, offering a good level of comfort and excellent breathability only in the sectors and to the extents actually required. Advantageously, the element of padding lends the crotch liner or the garment structural characteristics that translate into functional characteristics in order to obtain efficient temperature regulation that leaves the skin drive, thereby promoting the complete expulsion of moisture from the skin.

Furthermore, the shock-absorbing system according to the present invention offers clearly defined and delimited support and transpiration areas based on the type of function they have to perform since, depending on the conformation and arrangement of the towers, there can be sectors that absorb the perspiration and expel it outwards, breathable areas with different levels of transpiration according to necessities and the type of sport, insulated and insulating areas that protect the body part against the external environment and with a flexibility that allows unlimited, unrestricted freedom of motion and guaranteeing protection of the part.

A further advantage of the shock-absorbing system is that the said system offers the user a structure with areas that maintain the temperature and wick moisture off the skin and expel dampness outwards, leaving a pleasantly dry feeling on the skin as a result of which, when the user removes the garment, after sport, they do not feel any difference in temperature, only a feeling of wellbeing and immediate acclimatisation. A further advantage of the present shock-absorbing system is due to the fact that the said system is able to perform its protection function in different settings and sectors, such as in items of clothing and accessories such as helmets, elbow and knee protectors, etc or motorbike and/or bicycle saddles.

A further advantage is due to the fact that the shock-absorbing system in question is easy to manufacture and works well.

## Claims

1. A shock-absorbing system for clothing and accessories comprising a base plate (2) from which a plurality of "towers" (3) extends, wherein the said "towers"(3) are appropriately distributed over the surface of the plate (2) and whose arrangement and distribution over the said plate (2) creates a sort of grid (4) which generates a path with spaces and channels that lend flexibility to the element, since the plate is very thin, and circulation of air promoted by the presence of a plurality of holes (20) which are designed for the intake of air from the outside and the outlet of overheated air and perspiration from the body of the user, the distribution and arrangement of the towers over one surface of the plate is reproduced in a specular fashion on the other surface, the said plate (2) being very thin and therefore flexible, with the result that the said plate adheres very easily to the user's body since anatomical and, at the same time, is very light and not cumbersome, and - consequently - also aesthetically acceptable, the said shock-absorbing system essentially performing a cushioning function by means of the said shock-absorbing element constituted of a plate and towers, **characterised by** the fact that said towers (3) have different sized diameters from each other depending on the load to which they will be exposed.

2. A shock-absorbing system according to Claim 1, **characterised by** the fact that the distribution and arrangement of the towers combined with the channels in the grid allows air circulation even when the shock-absorbing element is exposed to pressure due to the user resting thereupon and - since the shock-absorbing element is very flexible - even when exposed to a load, there are some portions exposed to smaller loads, as result of which the air circulates and the different portions, whether exposed to loads or not, alternate continuously due to the user's movements and the dynamic combination of the said movements creates a "pump" effect inside the padding, originating from the expansion and subsequent compression movement, activating a forced expulsion mechanism which pushes out the air inside, which is loaded with moisture produced by perspiration resulting from physical exertion by the user, and a subsequent intake of air caused by a sort of "vacuum" (pressure difference) which is created as a result of the previous expulsion of the air and the movement of the air between the outside and the inside and vice versa is controlled by the plurality of holes (20), which contribute to an important aeration of the areas in contact with the element.

3. A shock-absorbing system according to Claim 1, **characterised by** the fact that the said plate (2) has a continuous, linear edge, features a series of jagged sections (6) with various conformations, which allow the plate to be clamped between other layers of material envisaged in the construction of a padding element.

4. A shock-absorbing system according to Claim 3,**characterised by** the fact that the conformation of the edge with the said series of jagged sections (6) allows the shock-absorbing element to be secured in a stable manner, preventing it from moving during the washing of the garment to which it is applied.

5. A shock-absorbing system according to Claim 1, **characterised by** the fact that when the shock-absorbing element is made of gel, a material which cannot be glued with other materials, the jagged edge means there can be sectors of glue (7) which create obstacles preventing the movement of the edge of the said element.

6. A shock-absorbing system according to Claim 1, **characterised by** the fact that the towers (3) have a flat upper surface, but can also be slightly arched to provide the user with a more localised support so as to leave even more space for the circulation of air in contact with the user's skin.

7. A shock-absorbing system according to Claim 1, **characterised by** the fact that the said shock-absorbing element features larger and more closely positioned towers to withstand a greater load and to provide a greater support area while gradually smaller towers are envisaged to withstand lower loads and provide less support.

8. A shock-absorbing system according to Claim 1, **characterised by** the fact that the said shock-absorbing element is envisaged to be inserted in a crotch liner for cycling tights and shorts, in the point where each ischial bone is resting on the saddle when it has an essentially elliptical or circular configuration, whereas when it has an essentially "pear-shaped" configuration and is designed to absorb shocks and vibrations in both the ischial and genital area, as well as promoting correct, adequate air exchange, the said shock-absorbing element is used to produce a crotch liner which may be used either alone or in association with layers of other materials, the said shock-absorbing element is designed to be inserted inside a helmet as a padding element to protect the head, allowing air circulation and the release of perspiration and moisture and keeping the user's head dry while also ensuring optimal comfort inside the helmet, and may be placed on the shoulders, on the elbows, and on the knees in clothing for motorcyclists or for other sports, and may be used to pad the saddle of both bikes and motorcycles, to pad knee pads, elbow pads, and shoulder pads for players of volleyball, basketball, or other sports where protection is required.

9. A shock-absorbing system according to Claim 1, **characterised by** the fact that the said shock-absorbing element has a structure featuring different sized "towers" in which the support is greater in the portion where the towers are more numerous and larger in size, the said portion being located in the area of greatest strain, in order to support that area of the user better and with greater comfort and according to the degree of shock-absorption to be achieved; indeed, the different "towers" have different sizes and a different distribution in order to offer users a range of protective elements depending on the user's requirements, weight, habits, and needs and the shape may furthermore be adjusted and adapted to meet specific protection requirements.

10. A shock-absorbing system according to Claim 1, **characterised by** the fact that the said shock-absorbing element is preferably made of thermoplastic gel, but the structure configuring the said system may also be made of other materials used for padding, such as foam, PVC, etc.

## Patentansprüche

1. Dämpfungssystem für Bekleidung und Accessoires mit einer Grundfolie (2) von der aus sich eine Vielzahl von "Türmen" (3) erstrecken, wobei die genannten "Türme" (3) angemessen auf der Oberfläche der Folie (2) verteilt sind und ihre Anordnung und Verteilung auf der genannten Folie (2) ein Gitter (4) darstellen, das einen Durchgang mit Freiräumen und Kanälen bildet, die dem Element eine Flexibilität verleihen, da die Folie sehr dünn ist, und einen Luftdurchfluss ermöglichen, der durch das Vorhandensein einer Vielzahl von Öffnungen (20) begünstigt wird; diese dienen dem Lufteintritt von außen und dem Austritt von erhitzter Luft und Schweiß, die vom Körper der Personen kommen; die Verteilung und Anordnung der Türme auf einer Oberfläche der Folie wiederholt sich gespiegelt auch auf der anderen Oberfläche; die genannte Folie (2) liegt, da sie sehr dünn und dadurch flexibel ist, sehr bequem am Körper des Benutzers an, ist anatomisch sowie gleichzeitig sehr leicht und erfordert wenig Platz, weshalb sie demzufolge auch ästhetisch akzeptabel ist; das genannte Dämpfungssystem übt im Wesentlichen durch das genannte, aus Folie und Türmen bestehende dämpfende Element die Funktion eines Polsters aus, das **dadurch gekennzeichnet ist, dass** die genannten "Türme" (3) je nach der Belastung, der sie ausgesetzt werden, unterschiedliche Durchmesser aufweisen.

2. Dämpfungssystem gemäß Patentanspruch 1, **dadurch gekennzeichnet, dass** die Verteilung und Anordnung der Türme in Kombination mit den Kanälen des Gitters eine Luftzirkulation auch dann ermöglicht, wenn das dämpfende Element einem durch die Auflage eines Benutzers verursachten Druck ausgesetzt ist; da das dämpfende Element auch bei einer Last sehr flexibel ist, sind in jedem Fall weniger belastete Bereiche vorhanden, weshalb die Luft fließen kann, und die verschiedenen belasteten oder nicht belasteten Bereiche wechseln somit durch die Bewegung des Benutzers ständig; diese dynamische Kombination von Bewegungen ruft einen "Pumpen"-Effekt im Inneren des Polsters hervor, der durch die Ausdehnung und die nachfolgende Kompression hervorgerufen wird, wobei ein Mechanismus für den erzwungenen Ausstoß der Luft aus dem Inneren ausgelöst wird; diese ist voller Feuchtigkeit, die durch das Schwitzen des Benutzers hervorgerufen wird; der "Pumpen"-Effekt bewirkt einen nachfolgenden Eintritt von Luft durch eine Art "Unterdruck" (Druckunterschied), der infolge der zuvor ausgetretenen Luft entsteht; die Bewegung der Luft zwischen Innen- und Außenbereich und umgekehrt wird durch die Vielzahl von Öffnungen (20) geregelt, die zu einer starken Belüftung der mit dem Element in Kontakt befindlichen Bereiche beitragen.

3. Dämpfungssystem gemäß Patentanspruch 1, **dadurch gekennzeichnet, dass** die genannte Folie (2) einen linearen und durchgehenden Rand sowie eine Reihe von Zacken (6) von unterschiedlicher Beschaffenheit aufweist, die eine Befestigung der Folie zwischen anderen für die Herstellung eines Polsters vorgesehenen Materialschichten ermöglicht.

4. Dämpfungssystem gemäß Patentanspruch 3, **dadurch gekennzeichnet, dass** die Beschaffenheit des Randes mit der genannten Reihe von Zacken (6) eine sehr stabile Befestigung des dämpfenden Elements ermöglicht und verhindert dadurch, dass es sich beim Waschen des Kleidungsstücks, an dem es angebracht ist, verschieben kann.

5. Dämpfungssystem gemäß Patentanspruch 1, **dadurch gekennzeichnet, dass**, wenn das dämpfende Element aus Gel besteht, einem Material, das nicht mit anderen Materialien verklebt werden kann, der gezackte Rand Bereiche mit Klebstoff (7) ermöglicht, die Hindernisse für die Verschiebung des Randes dieses Elements schaffen.

6. Dämpfungssystem gemäß Patentanspruch 1, **dadurch gekennzeichnet, dass** die Türme (3) eine flache Oberfläche haben aber sich auch leicht biegen lassen, um dem Benutzer eine präzisere Unterstützung zu bieten, so dass noch mehr Platz für die Luftzirkulation auf der Haut des Benutzers bleibt.

7. Dämpfungssystem gemäß Patentanspruch 1, **dadurch gekennzeichnet, dass** das genannte dämpfende Element die größten und engsten Türme aufweist, die eine größere Last tragen und eine größere Stützzone schaffen sollen, während die allmählich kleineren Türme eine geringere Last tragen und eine geringere Unterstützung bieten.

8. Dämpfungssystem gemäß Patentanspruch 1, **dadurch gekennzeichnet, dass** dieses dämmende Element für den Einsatz in einem Sitzpolster für Radfahrer-Hosen am Sitz jedes Sitzbeins vorgesehen ist, wenn es eine im Wesentlichen elliptische oder kreisförmige Ausbildung aufweist; wenn es im Wesentlichen eine "birnenförmig" Form aufweist ist es für die Dämpfung von Stößen, Vibrationen sowohl im ischiatischen als auch im Genitalbereich vorgesehen und sorgt für einen korrekten und angemessenen Luftaustausch; dieses dämmende Element wird sowohl allein als auch in Verbindung mit Schichten anderer Materialien zur Herstellung eines Hosenbodens verwendet; das genannte dämmende Element ist vorgesehen, um in einen Helm als Kopfschutzpolster eingesetzt zu werden, das eine Luftzirkulation und einen Austritt von Dampf und Feuchtigkeit ermöglicht, um den Kopf trocken zu halten und einen optimalen Komfort im Inneren des Helms zu gewährleisten; es kann an den Schultern, Ellenbogen und Knien bei Bekleidung für Motorradfahrer oder andere Sportarten eingesetzt werden, zur Polsterung des Sattels von Fahrrädern und Motorrädern, zum Füllen von Knie- oder Ellenbogenschützern und Schulterpolstern von Volleyball- und Basketballspielern bzw. anderen Sportarten verwendet werden, wo Schutz benötigt wird.

9. Dämpfungssystem gemäß Patentanspruch 1, **dadurch gekennzeichnet, dass** das genannte dämpfende Element eine Struktur mit Türmen unterschiedlicher Abmessungen aufweist, deren stützende Wirkung in dem Teil am größten ist, wo die Türme am zahlreichsten sind und die größten Abmessungen haben; dabei handelt es sich um den Bereich, der der stärksten Belastung ausgesetzt ist, um den Bereich des Benutzers besser und mit mehr Komfort und je nach gewünschtem Dämpfungsgrad zu stützen; so weisen die verschiedenen "Türme" unterschiedliche Größen und Verteilungen auf, um den Benutzern entsprechend ihren Erfordernissen, ihres Gewichtes, ihrer Gewohnheiten und Bedürfnissen eine Reihe von Schutzelementen zu bieten, wo auch die Form dem spezifischen Schutzbedürfnis angepasst werden kann.

10. Dämpfungssystem gemäß Patentanspruch 1, **dadurch gekennzeichnet, dass** das dämpfende Element vorzugsweise aus thermoplastischem Gel besteht, aber die Struktur, die es formt, jedoch auch aus anderen als Polster dienenden Materialien, wie Schaumstoffen, PVC usw. hergestellt werden kann.

## Revendications

1. Système amortissant pour vêtements et accessoires du type comprenant une feuille de base (2) à partir de laquelle s'étend une pluralité de « tours » (3) dans lequel lesdites « tours » (3) sont opportunément réparties sur la surface de la feuille (2) et dont la disposition et la répartition sur ladite feuille (2) créent une sorte de grille (4) qui donne lieu à un parcours avec des espaces et des canaux qui permettent une flexibilité à l'élément, la feuille étant très mince et une circulation d'air favorisée par la présence d'une pluralité de perforations (20) qui sont destinées à l'entrée d'air de l'extérieur et à la sortie d'air surchauffé et de sueur provenant du corps de la personne, la répartition et la disposition des tours sur une surface de la feuille est également proposée sur l'autre surface, ladite feuille (2) étant très fine est flexible, avec le résultat que ladite feuille adhère très confortablement au corps de l'utilisateur, étant anatomique et, en même temps, très légère et peu encombrante, avec pour conséquence d'être également acceptable du point de vue esthétique, ledit système amortissant remplissant substantiellement une fonction de rembourrage au moyen dudit élément amortissant constitué d'une feuille et de tours, **caractérisé en ce que** lesdites « tours » (3) ont des dimensions différentes en diamètre les unes par rapport aux autres en fonction de la charge à laquelle elles seront soumises.

2. Système amortissant selon la revendication 1, **caractérisé en ce que** la répartition et la disposition des tours combinées aux canaux de la grille permettent une circulation de l'air même lorsque l'élément amortissant est soumis à une pression pour l'appui d'un utilisateur et que l'élément amortissant est très flexible également avec une charge, il y a toujours des portions moins chargées pour lesquelles l'air circule et les différentes portions chargées ou non sont quoi qu'il en soit en alternance continue en raison du mouvement de l'utilisateur et cette combinaison dynamique de mouvements déclenche un effet « pompe » à l'intérieur du rembourrage qui se développe grâce au mouvement d'expansion et de compression successive en activant un mécanisme d'expulsion forcée de l'air à l'intérieur qui est chargé d'humidité produite par la transpiration à la suite de l'effort physique de l'utilisateur et à une entrée d'air successive à la suite d'une sorte de « vide » (différence de pression) qui se crée à la suite de l'air qui s'est échappé précédemment et le mouvement de l'air entre l'extérieur et l'intérieur et vice versa est géré par la pluralité de perforations (20) qui contribuent à une aération importante des zones en contact avec l'élément.

3. Système amortissant selon la revendication 1, **caractérisé en ce que** ladite feuille (2) présente un bord linéaire et continu, prévoit une série de dentelures (6) de conformation variable qui permettent un blocage de la feuille entre d'autres couches de matériau prévues dans la construction d'un rembourrage.

4. Système amortissant selon la revendication 3, **caractérisé en ce que** la conformation du bord avec ladite série de dentelures (6) permet de bloquer l'élément amortissant de manière stable en empêchant qu'il puisse se déplacer au cours des lavages du vêtement auquel il est appliqué.

5. Le système amortissant selon la revendication 1, **caractérisé en ce que** lorsque l'élément amortissant est réalisé en gel matériel qui ne peut pas être collé avec d'autres matériaux, le bord dentelé permet d'avoir des secteurs de colle (7) qui créent des obstacles au mouvement du bord de l'élément lui-même.

6. Système amortissant selon la revendication 1, **caractérisé en ce que** les tours (3) ont une surface supérieure plane, mais peuvent également être légèrement arquées pour offrir un appui plus ponctuel à l'utilisateur afin de laisser encore plus d'espace pour la circulation de l'air au contact de la peau de l'utilisateur.

7. Le système amortissant selon la revendication 1, **caractérisé en ce que** ledit élément amortissant présente les tours les plus grandes et les plus rapprochées destinées à supporter une charge plus importante et à réaliser une zone d'appui plus importante, tandis que les tours de dimensions réduites doivent supporter une charge plus faible et fournir un appui plus réduit.

8. Système amortissant selon la revendication 1, **caractérisé en ce que** ledit élément amortissant est prévu pour être inséré dans un chamois de pantalon de cycliste au niveau du point d'appui sur la selle de chaque os ischiatique lorsqu'il présente une configuration substantiellement elliptique ou circulaire tandis que lorsqu'il présente une configuration substantiellement « en poire », il est prédisposé à amortir les chocs, les vibrations tant dans la zone ischiatique que génitale, en plus de favoriser un échange d'air correct et adéquat, ledit élément amortissant est utilisé dans la réalisation d'un chamois à la fois seul et en association avec des couches d'autres matériaux, ledit élément amortissant est prévu pour être inséré à l'intérieur d'un casque en tant que rembourrage de protection de la tête permettant une circulation d'air et une fuite de vapeur et d'humidité qui permet de garder la tête au sec en plus de garantir un confort optimal à l'intérieur du casque, il peut être inséré dans les épaules, les coudes, les genoux dans des vêtements pour motocyclistes ou autres sports, utilisé pour rembourrer la selle à la fois de vélo et de moto, utilisé pour rembourrer les genouillères, les coudières et les protections d'épaule des joueurs de volley-ball, de basket-ball ou d'autres sports où des protections sont nécessaires.

9. Le système amortissant selon la revendication 1, **caractérisé en ce que** ledit élément amortissant présente une structure ayant les tours avec des dimensions différenciées dans lesquelles le support est plus grand dans la portion où les tours sont plus nombreuses et de plus grandes dimensions, portion placée au niveau de la plus grande contrainte afin de mieux soutenir et avec plus de confort la zone de l'utilisateur et en fonction du degré d'amortissement que l'on souhaite obtenir ; en effet, les différentes « tours » ont des dimensions différentes et une répartition différente afin d'offrir aux utilisateurs une gamme d'éléments de protection en fonction des besoins de l'utilisateur, de son poids, de ses habitudes et de ses besoins et même la forme peut être adaptée au besoin spécifique de protection.

10. Système amortissant selon la revendication 1, **caractérisé en ce que** ledit élément amortissant est de préférence en gel thermoplastique, mais la structure qui le configure peut également être réalisée en d'autres matériaux destinés au rembourrage tels que les mousses, le PVC, etc.
